# EUROPÄISCHE PATENTSCHRIFT

(11) **EP 1 165 343 B1**
(45) Veröffentlichungstag und Bekanntmachung des Hinweises auf die Patenterteilung: **14.09.2005**
(21) Anmeldenummer: 00920396.9
(22) Anmeldetag: 17.03.2000
(51) Int. Cl.: B60N 2/16, B60N 2/22, B60N 2/42

(54) **CRASHVERRIEGELUNG FÜR EINE VERSTELLEINRICHTUNG EINES KRAFTFAHRZEUGSITZES**
CRASH LOCKING MECHANISM FOR AN ADJUSTMENT DEVICE OF AN AUTOMOBILE SEAT
VERROUILLAGE DE SECURITE D'UN DISPOSITIF DE REGLAGE D'UN SIEGE DE VEHICULE

(30) Priorität: 17.03.1999 DE 19911786
(43) Veröffentlichungstag der Anmeldung: 02.01.2002
(73) Patentinhaber: Brose Fahrzeugteile GmbH & Co. KG, 96450 Coburg (DE)
(72) Erfinder: HOFMANN, Jochen, D-96328 Küps (DE); KRÖNER, Gregor, D-96120 Bischberg (DE)
(74) Vertreter: Baumgärtel, Gunnar
(86) Internationale Anmeldenummer: PCT/DE2000/000851
(87) Internationale Veröffentlichungsnummer: WO 2000/055004

(56) Entgegenhaltungen:
- EP-A- 0 559 566
- EP-A- 0 806 319
- DE-A- 3 642 349
- DE-A- 4 408 219
- DE-C- 19 652 665
- DE-C- 19 652 946
- US-A- 3 514 155
- US-A- 5 163 736

## Beschreibung

Die Erfindung betrifft eine Crashverriegelung für Verstelleinrichtungen von Kraftfahrzeugsitzen gemäß dem Oberbegriff des Anspruchs 1.

An Verstelleinrichtungen von Kraftfahrzeugsitzen werden hohe Sicherheitsanforderungen gestellt, um im Falle eines Crashs das zulässige Maß der Sitzverlagerung nicht zu überschreiten, was ansonsten zu einem erheblich vergrößerten Verletzungsrisiko führen würde. Besonders groß sind die bei einem Frontcrash durch einen sogenannten gurtintegrierten Sitz aufzunehmenden Kräfte, weil die vom Sitzbenutzer ausgehenden Kräfte über einen oder mehrere Gurtanbindungspunkte in das Sitzgestell eingeleitet werden. Bei motorisch verstellbaren Sitzen müssen die Getriebe deshalb auf den Extremfall des Crashs hin dimensioniert werden, was zu erheblichen Mehraufwendungen führt.

Ein gattungsgemäßer Sitz ist aus der DE 44 08 219 A1 bekannt. Er kombiniert die Höhenverstelleinrichtung mit einer Fangvorrichtung, die eine Verlagerung der Verstelleinrichtung über ein bestimmtes maximales Maß hinaus hindern soll. Die beschriebene Lösung ist zwar geeignet, den Sitz am Verlassen eines vorgegebenen Kennfeldes bei einem Frontcrash zu verhindern, jedoch kann ein und dieselbe Fangvorrichtung nicht gleichzeitig auch zur Begrenzung der Folgen eines Heckcrashs benutzt werden. Außerdem wird die Fangvorrichtung erst an der Verstellgrenze der Verstelleinrichtung wirksam.

Aus der DE 36 42 349 C2 ist ein höheneinstellbarer Fahrzeugsitz mit einer Gurtanbindung an der Oberschiene der Sitzlängsverstellung bekannt. Das betreffende Gurtschwert ist zweiteilig und zueinander verschiebbar ausgebildet, wobei das an der Oberschiene befestigte Teil eine sägezahnförmige Verzahnung aufweist, in die Formschlußelemente des anderen, dazu verschiebbaren und am Sitzgestell angeschlagenen Teils im Crashfall eingreifen können. Während des Normalbetriebs verhindern Führungselemente einen unerwünschten Eingriff der Formschlußelemente. Im Crashfall kommt es zu einer Schwenkbewegung des am Sitzgestell befestigten Teils des Gurtschwerts, wodurch die Führungselemente zerstört werden und die Formschlußelemente in Eingriff gelangen.

Nachteilig ist hierbei, daß die Sicherheitvorrichtung erst zur Wirkung kommt, wenn schon erhebliche Gurtkräfte wirken. Darüber hinaus kann die Vorrichtung bei einem Heckcrash und bei Belastungen durch Ladegut keine Wirkung entfalten.

Aus der DE 196 52 946 C1 ist eine Rasteinrichtung zur Verriegelung einer neigungsverstellbaren Rückenlehne eines Kraftfahrzeugsitzes in Abhängigkeit vom Überschreiten eines in Längsrichtung des Kraftfahrzeugs auftretenden Beschleunigungswertes bekannt, bei der auf der drehfest gelagerten Schwenkachse eines aus einem sitzfesten Gelenkteil und einem lehnenfesten Gelenkteil bestehenden Gelenks ein exzentrisches Schwunggewicht auf einem Gewindeabschnitt geführt ist. Im Crashfall kommt das Schwunggewicht durch Verschiebung auf dem Gewindeabschnitt in Anlage an Vorsprünge einer Druckplatte, die auf der Schwenkachse axial verschiebbar ist und deren Vorsprünge das sitzfeste Gelenkteil formschlüssig durchgreifen. Dadurch kommen an der Druckplatte vorgesehene Rastmittel in Eingriff mit Rastmitteln des lehnenfesten Gelenkteils, so daß das zwischen Sitzteil und Rücklehne vorgesehene Gelenk im Crashfall arretiert ist.

Der Erfindung liegt die Aufgabe zugrunde, eine Crashverriegelung für Verstelleinrichtungen von Kraftfahrzeugsitzen zu entwickeln, die unter Ausnutzung der bei einem Crash auftretenden Trägheitskräfte eine erhöhte Funktionssicherheit aufweist und an verschiedene Verstelleinrichtungen eines Kraftfahrzeugsitzes anpaßbar ist. Darüber hinaus soll die neue Crashverriegelung bei Bedarf derart ausgebildet werden können, daß nur eine einzige dieser Vorrichtungen sowohl für einen Frontcrash wie auch für einen Heckcrash wirksam werden kann.

Die Aufgabe wird durch die Merkmale des Patentanspruchs 1 gelöst.

Die erfindungsgemäße Lösung schafft eine Crashverriegelung für Verstelleinrichtungen von Kraftfahrzeugsitzen, die unter Ausnutzung der bei einem Crash auftretenden Trägheitskräfte eine erhöhte Funktionssicherheit aufweist, an verschiedene Verstelleinrichtungen eines Kraftfahrzeugsitzes anpaßbar ist und die bei Bedarf derart ausgebildet werden kann, daß nur eine einzige dieser Vorrichtungen sowohl für einen Frontcrash wie auch für einen Heckcrash wirksam werden kann.

Nach der erfindungsgemäßen Lösung ist der Auslösemechanismus der Crashverriegelung beim Überschreiten einer vorgegebenen Crashbelastung von dem oder den Verriegelungselementen entkoppelbar, wobei die Verriegelungselemente in Verriegelungsrichtung federelastisch vorgespannt sind und nach ihrer Entkopplung vom Auslösemechanismus selbsttätig den Verriegelungszustand unumkehrbar herstellen.

Der Auslösemechanismus besitzt einen Auslösekörper, der infolge der bei einem Crash auftretenden Trägheitskräfte seine Ruhelage verlassen kann und dadurch ein dem Verriegelungselement zugeordnetes Rückhalteelement steuert, an dem sich die Federkraft des vorgespannten Verriegelungselements abstützt. Wird das Rückhalteelement unwirksam geschaltet, so erfolgt durch die auf das Verriegelungselement einwirkende Federkraft eine Aktivierung der Crashverriegelung.

Vorzugsweise ist das Rückhalteelement formschlüssig mit dem Verriegelungselement verbunden, wobei der Formschluß, gesteuert durch den Auslösekörper, lösbar ist.

Grundsätzlich können die Auslösebedingungen für einen Frontcrash oder einen Heckcrash übereinstimmend eingestellt werden. Um zur Auslösung der Crashverriegelung zwischen einem Frontcrash und einem Heckcrash zu unterscheiden, ist der Auslösemechanismus und/oder die Verbindung des Auslösemechanismus mit dem Rückhalteelement so ausgebildet, daß die Auslöseenergie bzw. die Auslösezeit in Abhängigkeit vom Aufprallort, nämlich einem Heckcrash oder einem Frontcrash, veränderbar sind.

Die formschlüssige Verbindung zwischen dem Rückhalteelement und dem Auslösekörper kann entweder in einer festen Verbindung von Rückhalteelement und Auslösekörper, insbesondere durch Ausbildung des Rückhalteelements als einstückigem Bestandteil des Auslösekörpers, oder durch eine wechselseitige Verriegelung von Rückhalteelement und Auslösekörper gebildet werden.

Dementsprechend besitzt in einer ersten Ausführungsform der Auslösemechanismus eine Kulisse, die bezüglich der Drehachse des schwenkbar gelagerten Auslösekörpers Bereiche mit sich radial veränderndem Abstand aufweist. An den dabei gebildeten Maximum- oder Minimumbereich schließen sich Bereiche mit geringerem bzw. größerem Abstand zur Drehachse an. Dieser Kulisse ist ein angefedertes Halteelement zugeordnet, das in der Ruhelage des Auslösekörpers in den Maximum- bzw. Minimumbereich der Kulisse eingreift. Schwenkt nun der Auslösekörper infolge einer ausreichend großen Trägheitskraft aus seiner Ruhelage heraus, so wird dieser unter Erhöhung der auf die Kulisse einwirkenden Federkraft über den an den Maximum- bzw. Minimumbereich angrenzenden Bereich der Kulisse geführt.

Hierdurch wird zusätzlich erreicht, daß durch eine geeignete Gestaltung der Kontur der Kulisse (und der darauf abzustimmenden Federkraft für das vorzuspannende Halteelement sowie der Dimensionierung des beschleunigungssensitiven Auslösekörpers) gezielt Einfluß auf die Auslösekraft und den Auslösezeitpunkt genommen werden kann. Dies eröffnet der Erfindung die Möglichkeit, nahezu an jede beliebige Vorgabe anpaßbar zu sein und so das Verletzungsrisiko für den Sitzbenutzer zu senken.

Wenn man die beschriebene Kulisse beidseitig des Maximum- bzw. Minimumbereichs mit angrenzenden Bereichen versieht, über die das angefederte Halteelement in Abhängigkeit von der Richtung der Crashbelastung führbar ist und den Auslösekörper in beide Richtungen schwenkbar lagert, dann kann ein und dieselbe Crashverriegelung zur Sicherung der Sitzverstellvorrichtung bei Front- und Heckcrash wirksam werden. In Abhängigkeit von den gestellten Anforderungen kann die Kulisse bzgl. des Maximum-/Minimumbereichs symmetrisch oder asymmetrisch ausgebildet sein. Letzteres ist sinnvoll, wenn unterschiedliche Bedingungen von Frontcrash und Heckcrash zu berücksichtigen sind. Wegen der kürzeren Relativbewegungen eines Insassen in Richtung Rückenlehne infolge eines Heckcrashs im Vergleich zur Gegerichtung bis zu einem gestrafften Gurt erscheint die Dimensionierung des Auslösemechanismus für einen Heckcrash derart sinnvoll, daß die Auslöseenergie gegenüber einem Frontcrash erhöht und die Auslösezeit verkürzt ist.

Je größer die notwendige Auslöseenergie des Auslösemechanismus sein soll, umso steiler ist die Steigung der sich an den Minimum-/Maximumbereich anschließenden Bereiche zu wählen. Natürlich spielt in diesem Zusammenhang auch die Kontur, das Material und die Konstruktion des mit der Kulisse im Eingriff stehenden Halteelements eine Rolle. So ist beispielsweise unter Verwendung eines Halteelements in Form eines Bolzens, der mit der Kulisse eine Reibpaarung bildet, mit einer höheren notwendigen Auslösekraft zu rechnen als bei einem Halteelement mit Rollführung.

Zur Beeinflussung der Schaltzeit eignet sich die Länge der Kulisse. Die Länge der sich an den Maximum-/Minimumbereich anschließenden Bereiche sollte umso größer gewählt sein, desto länger der Zeitraum vom Beginn eines Crashs bis zur Freigabe der Rastbewegung der Verriegelungselemente gewünscht wird.

Idealerweise werden die Länge des sich an den Maximum-/Minimumbereich anschließenden Bereichs der Kulisse und das Zusammenwirken der Rückhalteelemente und der Verriegelungselemente derart aufeinander abgestimmt, daß mit dem Überschreiten des freien Endes der Kulisse die Rastbewegung der Verriegelungselemente startet.

In einer zweiten Ausführungsform sind das Rückhalteelement und der Auslösekörper durch Form- und/oder Kraftschluß wechselseitig verriegelbar, wobei die wechselseitige Verriegelung aufgehoben wird, wenn die vorgegebene Crashbelastung überschritten wird.

Diese wechselseitige Verriegelung von Rückhalteelement und Auslösekörper ist nach dem Mausefallenprinzip aufgebaut. Das das Verriegelungselement bzw. die Verriegelungselemente im gespannten Zustand haltende Rückhalteelement wird dabei im Ruhezustand mit dem Auslösekörper form- und/oder kraftschlüssig verriegelt. Bei einer trägheitsbedingten Bewegung des Auslösekörpers bei Überschreiten der vorgegebenen Crashbelastung wird diese wechselseitige Verriegelung von Rückhalteelement und Auslösekörper aufgehoben, so daß das Rückhalteelement das oder die vorgespannten Verriegelungselemente für die Crashverriegelung freigibt. Der Bewegungsablauf beim Aufheben der wechselseitigen Verriegelung läuft dabei analog zum Auslösen einer Mausefalle ab.

Um die Bewegungsrichtung des Auslösekörpers von der des Rückhalteelements zu entkoppeln, ist zwischen dem Rückhalteelement und dem Auslösekörper ein um eine Rastelementachse schwenkbares Rastelement angeordnet, das eine am Auslösekörper anliegende Stirnfläche eines ersten Kontaktbereichs und einen die Verriegelung mit dem Rückhalteelement bildenden zweiten Kontaktbereich aufweist. Diese Ausgestaltung ermöglicht es weiterhin, das Rastelement unabhängig vom Auslösekörper vorzuspannen, um die kraft- und/oder formschlüssige Verriegelung mit dem Rückhalteelement zu sichern. Zu diesem Zweck ist das Rastelement in Schwenkrichtung um seine Rastelementachse federbelastet.

Die wechselseitige Verriegelung zwischen dem Rastelement und dem Rückhalteelement erfolgt über eine kleine Fläche, damit die Reibung zwischen den in Eingriff miteinander stehenden Verriegelungsflächen von Rückhalteelement und Rastelement einen vernachlässigbaren Einfluß auf die Auslösung der Crashverriegelung haben. Zu diesem Zweck ist das Rückhalteelement um eine im wesentlichen parallel zur Rastelementachse verlaufende Rückhalteelementachse schwenkbar und weist mindestens eine an einem Bund des mindestens einen Verriegelungselements anliegende Schulter und einen an einer Nase des Rastelements und der Federspannung anliegenden Steg auf.

Zur Herstellung der wechselseitigen Verriegelung von Rückhalteelement und Rastelement sind die Schulter und der Steg des Rückhalteelements auf der einen Seite der Rückhalteelementachse und ein Spannhebel auf der anderen Seite des Rückhalteelements angeordnet.

Im gespannten Zustand der Crashverriegelung stoßen dabei die Stirnflächen der Nase des Rastelements und des Steges des Rückhalteelements kraftschlüssig gegeneinander.

In dieser Ausführungsform der Erfindung besteht der Auslösekörper vorzugsweise aus einem um eine Drehachse schwenkbaren Trägheitselement, das ein achsfernes Masseelement und einen um die Drehachse des Trägheitselements angeordneten Lagerbereich aufweist. Dadurch kann der Auslösemechanismus so ausgebildet werden, daß Im gespannten Zustand der Crashverriegelung die Stirnfläche des ersten Kontaktbereichs des Rastelements an einer Stirnfläche des Lagerbereichs des Trägheitselements anliegt und die Lage des Rastelements in Bezug auf die Drehachse des Trägheitselements veränderbar ist.

Bei einer symmetrischen Lage der Stitnfläche des ersten Kontaktbereichs des Rastelements in Bezug auf die Drehachse des Trägheitselements gelten gleiche Auslösebedingungen für die Crashverriegelung bei einem Heck- oder einem Frontcrash. Bei einer asymmetrischen Anordnung der Stirnfläche des ersten Kontaktbereichs des Rastelements in Bezug auf die Drehachse des Trägheitselements werden unterschiedliche Auslösebedingungen für die Crashverriegelung in Abhängigkeit von einem Frontcrash oder einem Heckcrash hergestellt.

Vorzugsweise sind auch bei diesem Ausführungsbeispiel zwei Verriegelungselemente nebeneinander angeordnet, wobei zwei um Ausnehmungen ausgebildete Schultern des Rückhalteelements vorgesehen sind, zwischen denen der mit der Nase des Rastelements kraft und/oder formschlüssig verriegelbare Steg des Rückhalteelements angeordnet ist.

Für die konstruktive Ausführung der voranstehend erläuterten Ausführungsbeispiele stehen verschiedene Wege offen: So kann beispielsweise die Kulisse Bestandteil des Auslösekörpers und das angefederte Halteelement am Sitzgestell gelagert sein. Umgekehrt kann aber auch die Kulisse am Seitenteil angeordnet und das angefederte Halteelement am oder im Auslösekörper gelagert sein. Unterschiedliche Varianten sind auch zur Erzeugung der Federverspannung zwischen dem Halteelement und der Kulisse vorstellbar. Dies kann z.B. durch ein separates Federelement, durch einen die Kulisse bildenden Federbügel oder durch die elastische Biegung eines Federarms geschehen.

Um eine hohe Reaktionsgeschwindigkeit der Crashverriegelung sicherstellen zu können und den Platzbedarf zu minimieren, sollten Masse und Volumen der zu schaltenden Verriegelungselemente möglichst gering sein. Die dadurch eingeschränkte mechanische Belastbarkeit muß die Wirksamkeit der Crashverriegelung nicht einschränken. Wenn man die Verriegelungselemente nur auf Scherung beansprucht, kann das eingesetzte Material optimal ausgenutzt werden. Dazu geeignet ist eine Mehrfachdurchsteckverbindung derart, daß das Verriegelungselement im Zustand der Crashverriegelung eine Rastöffnung im Sitzgestell (z.B. im Seitenteil), eine Rastöffnung in einem mit dem Sitzgestell verbundenen Teil sowie eine Rastöffnung in einem an einem Basisteil (z.B. an der Oberschiene 2) des Sitzes befestigten Teils durchgreift.

Die Rastöffnungen des mit dem Basisteil verbundenen Teils sollten wesentlich größer als die sitzgestellseitigen Rastöffnungen sein, z.B. 1,5 bis 2 mal so groß, und eine von der Teilung der Verriegelungselemente unterschiedliche Teilung aufweisen, damit in jeder beliebigen Verstellposition der Sitzverstelleinrichtung wenigstens ein Verriegelungselement in eine Rastöffnung des mit dem Basisteil verbundenen Teils einrasten kann.

Nachfolgend wird die Erfindung anhand von Ausführungsbeispielen sowie der dargestellten Figuren näher erläutert. Es zeigen:
- Figur 1: eine perspektivische Darstellung eines Sitzuntergestells mit einer Verstelleinrichtung für die Sitzhöhe in einer Ansicht von seiten der äußeren Teile der Crashverriegelung;
- Figur 2: eine perspektivische Darstellung eines Sitzuntergestells mit einer Verstelleinrichtung für die Sitzhöhe in einer Ansicht von seiten der inneren Teile der Crashverriegelung;
- Figur 3: einen vergrößerter Ausschnitt der Crashverriegelung in einer Ansicht von außen;
- Figur 4: einen vergrößerten Ausschnitt der Crashverriegelung in einer Ansicht von innen;
- Figur 5: einen Querschnitt durch die Crashverriegelung entlang der Längsachse einer Rückhaltenase;
- Figur 6: ein schwenkbares Verriegelungselement mit separater Eindrückfeder;
- Figur 7: ein schwenkbares Verriegelungselement mit integrierter Eindrückfeder;
- Figur 8: einen Auslösekörper mit integriertem Feder- und Kulissenbereich;
- Figur 9: einen Auslösekörper mit darin gelagertem, gegen eine sitzgestellseitige Kulisse angefedertem Halteelement;
- Figur 10: ein einseitig eingespanntes Verriegelungselement mit einem als Eindrückfeder ausgebildeten Hebelarm;
- Figuren 11 bis 17: verschiedene perspektivische Ansichten und Draufsichten auf eine Ausführungsform der Erfindung mit wechselseitiger Verriegelung von Rückhalteelement und Auslösekörper bzw. einem Rastelement und
- Figur 18: eine Seitenansicht der Ausführungsform gemäß den Figuren 11 bis 17.

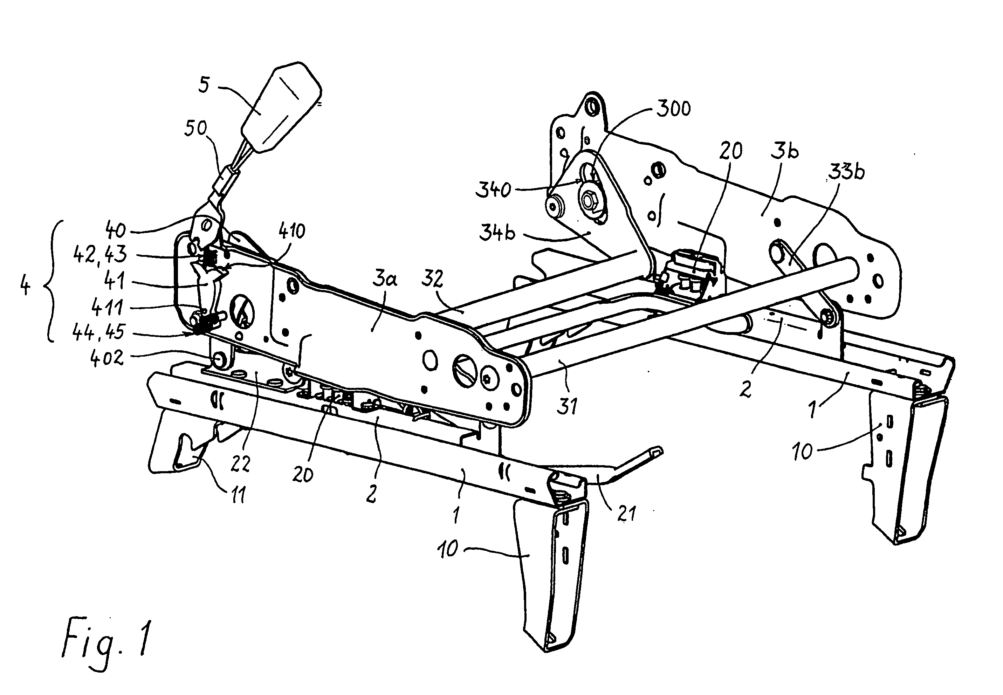

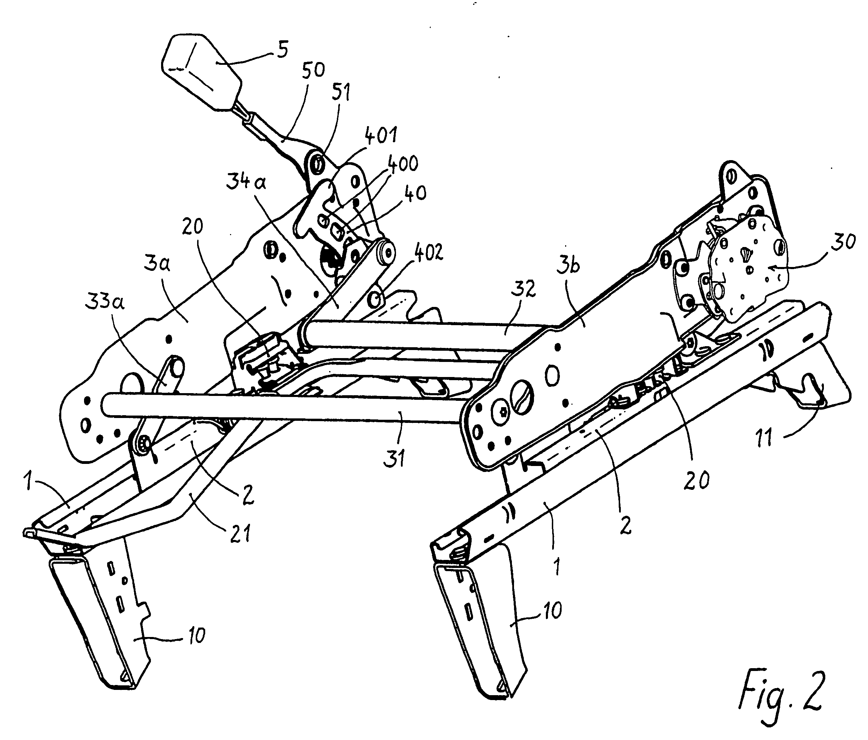

Die zur Erläuterung der Crashverriegelung 4 gewählten sowie in einer Übersicht in den Figuren 1 und 2 dargestellten Ausführungsbeispiele beziehen sich auf ein Sitzuntergestell mit einer Verstellvorrichtung 30 für die Sitzhöhe. Das Sitzgestell ist im wesentlichen aufgebaut aus parallel verlaufenden Schienenführungen 1, 2, deren Unterschienen 1 über Bodenbefestigungen 10, 11 mit dem Fahrzeugboden verbunden sind. Die daran geführten Oberschienen 2 sind über manuell betätigbare Verriegelungsvorrichtungen 20 miteinander verriegelbar. Die Antriebshebel 34a, 34b, die ihrerseits durch ein Querrohr 32 kekoppelt sind, und die Ausgleichshebel 33a, 33b verbinden die Oberschienen 1, 2 gelenkig mit den Seitenteilen 3a, 3b.

Durch die am Seitenteil 3b montierte Verstellvorrichtung 30 wird die Antriebskraft über ein Ritzel 300 auf ein Zahnsegment 340 des Antriebshebels 34b übertragen und durch das Querrohr 32 zum Antriebshebel 34a der gegenüberliegenden Seite weitergeleitet. Im hinteren Bereich des Seitenteils 3a ist das Gurtschloß 5 mittels eines Gurtschloßhaltewinkels 50 befestigt. Um die in diesem Bereich zu erwartenden hohen Crashkräfte sicher übertragen zu können, ist dort ein die Belastbarkeit erhöhender Haltewinkel 22 vorgesehen.

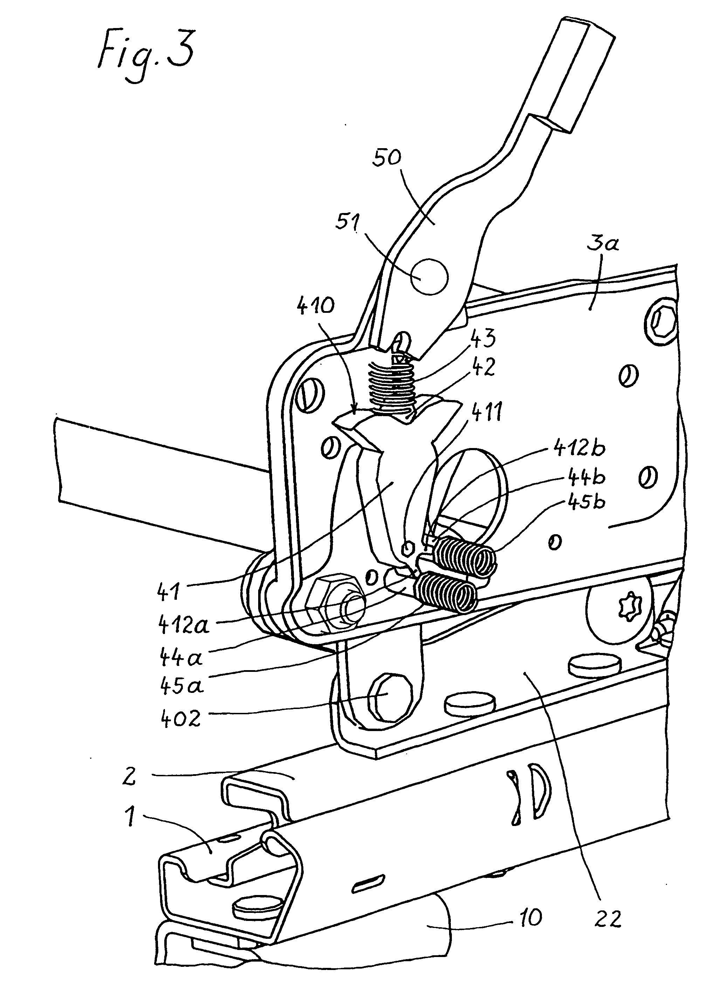

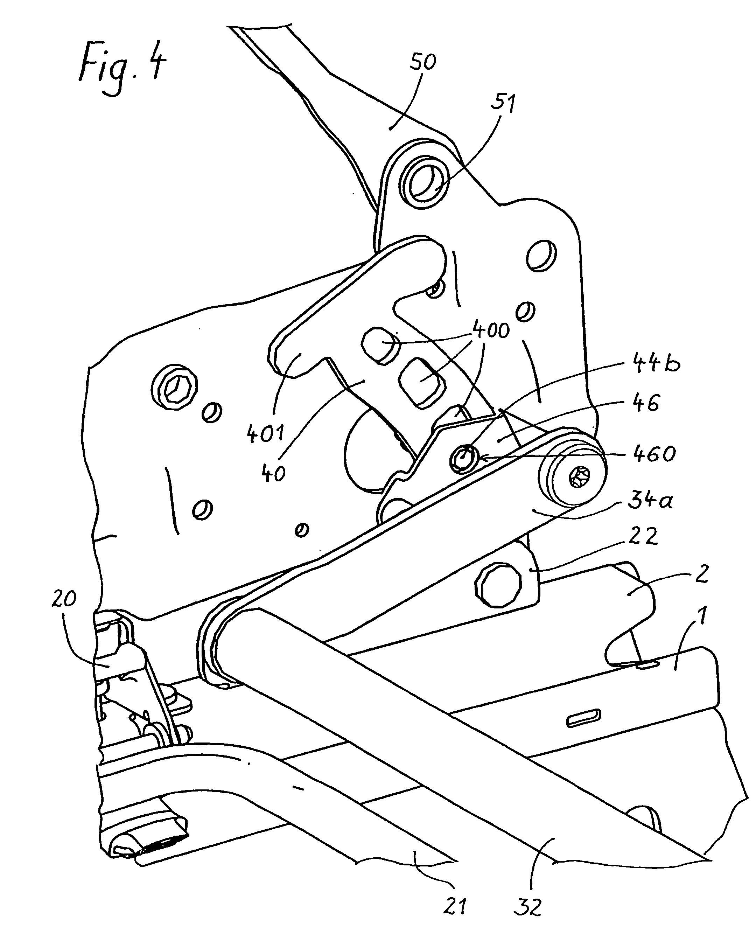

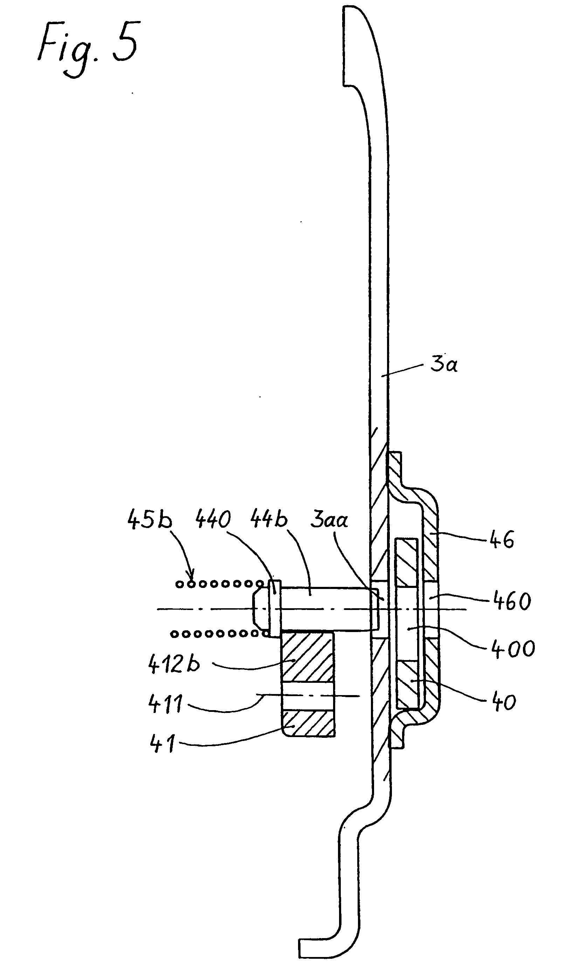

Der Bereich höchster Belastung ist ausgestattet mit der Crashverriegelung zur Vermeidung einer crashbedingten Höhen- und Vorverlagerung des Sitzes. Sie besteht im wesentlichen aus einem Auslösemechanismus 4, zu dem in einer in den Figuren 3 bis 5 im Detail dargestellten ersten Ausführungsform der Erfindung der durch die Trägheitskraft bewegbare Auslösekörper 41, die daran angeformten Rückhaltenasen 412a, 412b, die ebenfalls daran angeformte Kulisse 410 sowie das durch die Feder 43 gegen die Kulisse 410 angefederte Halteelement 42 gehören, und einem Verriegelungsmechanismus, der aus den durch die Federn 45a, 45b in Verriegelungsrichtung vorbelasteten Verriegelungsbolzen 44a, 44b sowie den Rastöffnungen 3aa, 400, 460 der Teile 3a, 40, 46 besteht.

Der Auslösekörper 41 lagert auf der Drehachse 411 schwenkbar am Seitenteil 3a. In seinem oberen Bereich ist eine symmetrisch ausgebildete Kulisse 410 angeformt, die aus einem zentralen, in der vertikalen Achse des Auslösekörpers 41 liegenden konkaven Kulissenbereich (Minimumbereich) und sich beidseitig anschließenden konvexen Bereichen besteht. Am Seitenteil 3a stützt sich eine Feder 43 ab und drückt das als Kugel ausgebildete Halteelement 42 in den zentralen Minimumbereich der Kulisse 410.

Bei Einwirkung von Beschleunigungskräften infolge eines Front- oder Heckcrashs auf den Auslösekörper 41 kann sich dieser aus seiner (dargestellten) Ruheposition herausbewegen, wobei eine zunehmend größere Kraft notwendig ist, die Feder 43 des Halteelements 42 zu komprimieren. Mit dem Erreichen des freien Endes der Kulisse 410 ist die Schaltkraft am größten. Bei Überschreitung dieses Punktes schlägt der Auslösekörper 41 um und gibt spätestens dann die vorgespannten Verriegelungselemente 44a, 44b frei. Durch Abstimmung der Teile des Auslösemechanismus kann die Auslösekraft, und damit die erforderliche Crashenergie für das Wirksamwerden der Crashverriegelung und die Auslösezeit bestimmt werden, die für eine Aktivierung notwendig ist. Die Kombination dieser beiden Schaltgrößen hat den Vorteil, daß Fehlauslösungen der Vorrichtung z.B. durch einen sehr kurzzeitigen Stoß mit hoher Energiedichte aber geringem Gesamtenergiegehalt ausgeschlossen werden können.

In der Ruheposition des Auslösekörpers 41 untergreifen die Rückhaltenasen 412a, 412b den Bund 440 der Verriegelungsbolzen 44a, 44b, während sich auf der anderen Seite die Federn 45a, 45b abstützen. Die Federn 44a, 44b stützen sich an einem (nicht dargestellten) Gehäuse ab, das alle auf der Außenseite des Seitenteils 3a angeordneten Teile umschließt.

Zwischen dem Seitenteil 3a und einem darauf befestigten Stützblech 46 ist ein Rasthebel 40 geführt, so daß im Crashfall eine Beanspruchung auf Scherung erfolgt. Mit einem Ende ist der Rasthebel 40 am Haltewinkel 22 befestigt und an seinem freien Ende trägt er einen Endanschlag 401, der die maximal mögliche Höhenverlagerung des Sitzes begrenzt. Entlang des Hebels sind Rastöffnungen 400 für den Eingriff der Verriegelungsbolzen 44a, 44b eingearbeitet. Diese Rastöffnungen 400 sind wesentlich größer als die im wesentlichen paßgenauen Rastöffnungen 3aa, 460 des Seitenteils 3a und des Stützblechs 46. Auch die Teilung der Rastöffnungen 400 unterscheidet sich von der der Verriegelungsbolzen 44a, 44b. Dadurch soll in jeder Sitzposition eine sichere Verriegelung gewährleistet werden.

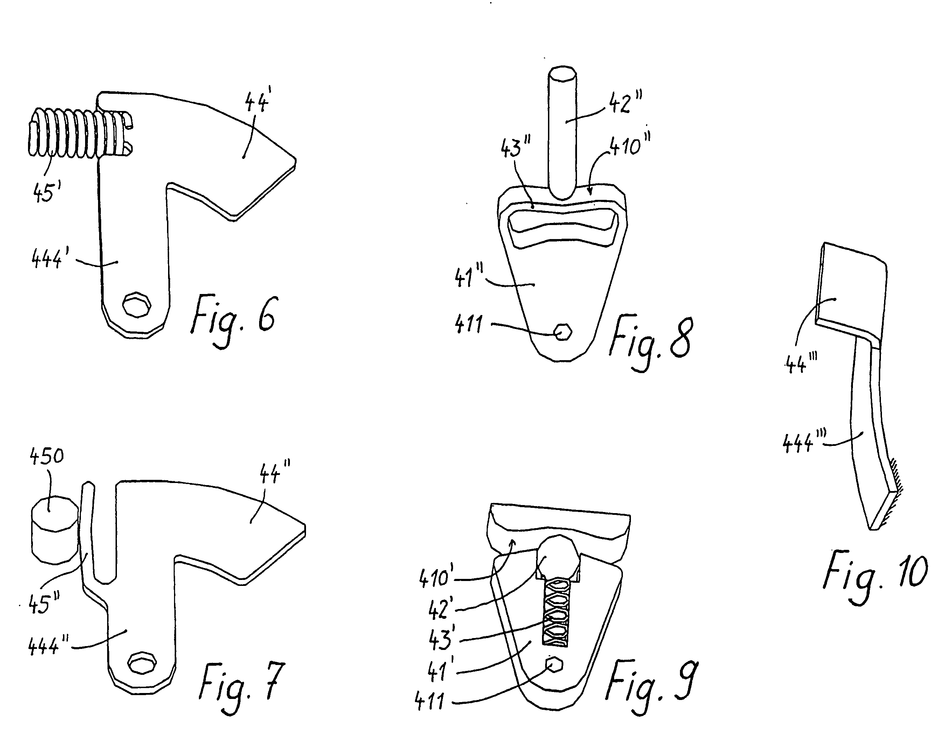

In den Figuren 6, 7 und 10 sind Alternativen zu den bolzenartigen Verriegelungselementen 44a, 44b dargestellt. Ihre Rastfinger 44', 44'', 44''' bilden einen Bestandteil eines schwenkbar gelagerten Hebels 444', 444'', der durch eine separate oder eihstückig integrierte Eindrückfeder 45', 45'' in Rastrichtung vorgespannt ist, bzw. einen Bestandteil eines fest "eingespannten" und federelastisch gebogenen Hebels 444'''. Den Rastfingern 44', 44'', 44''' sind analog zum voran beschriebenen Ausführungsbeispiel (nicht dargestellte) Rastöffnungen im Seitenteil 3a zugeordnet.

Figur 8 zeigt einen um eine Drehachse 411 schwenkbaren Auslösekörper 41'' mit einem Federbügel 43'', der gleichzeitig die Kulisse 410'' bildet. Einer derartigen Kulisse 410'' kann ein starres, nicht angefedertes Halteelement 42'' zugeordnet werden. Beim Schwenken des Auslösekörpers 41'' verändert die Kulisse 410'' ihre Kontur.

Der in Figur 9 dargestellte, um eine Drehachse 411 schwenkbare Auslösekörper 41' nimmt in seinem axialen Bereich eine Feder 43' sowie ein kugelförmiges Halteelement 42' auf. Die zugeordnete Kulisse 410' ist am Seitenteil 3a angeordnet oder angeformt.

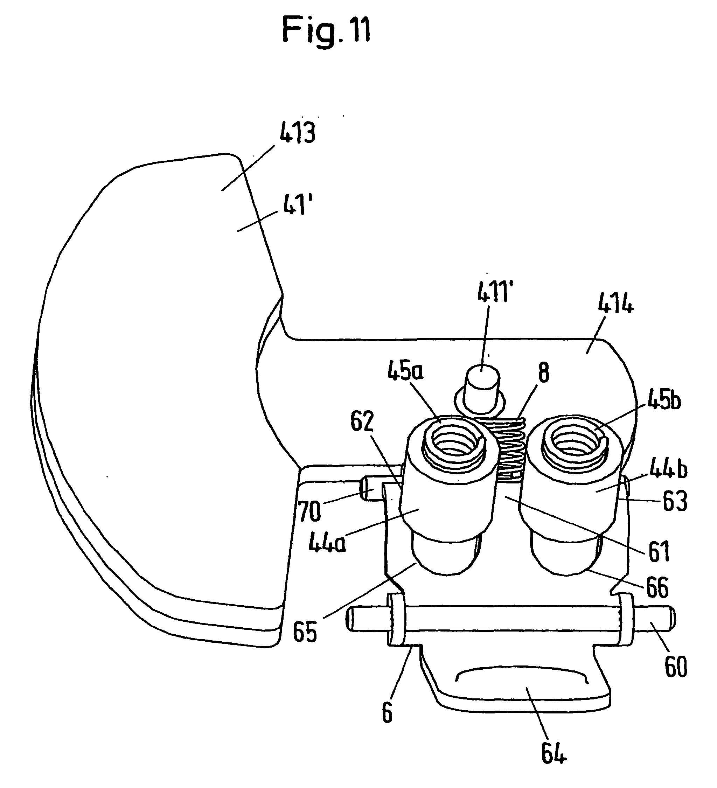

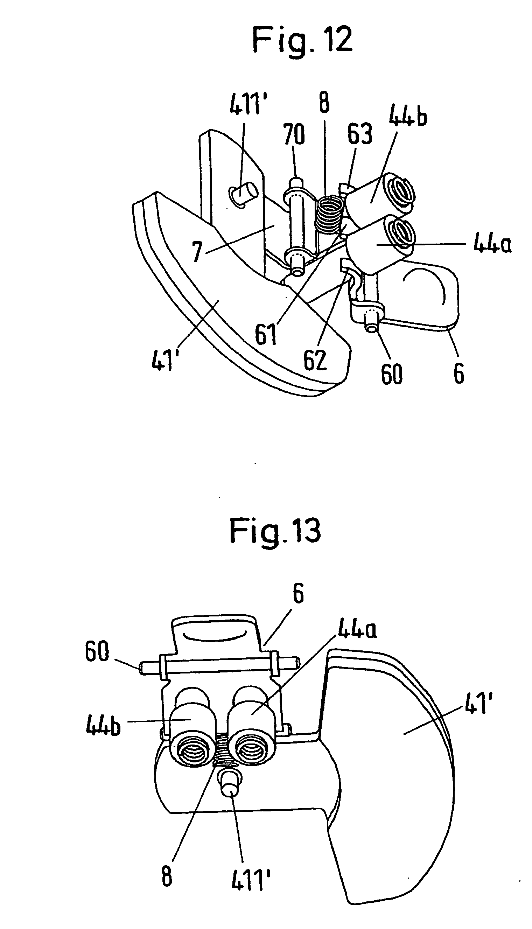

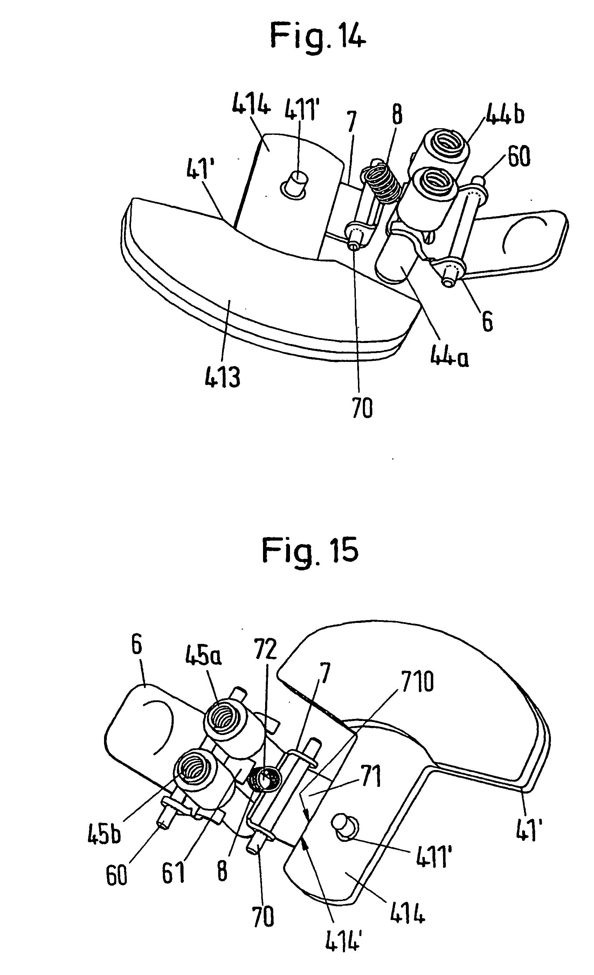

In den Figuren 11 bis 18 ist eine weitere Ausführungsform der Erfindung in verschiedenen perspektivischen Ansichten, Draufsichten und in einer Seitenansicht dargestellt, bei der die formschlüssige Verbindung zwischen einem Rückhalteelement 6 und einem als Trägheitselement 41' ausgebildeten Auslösekörper unter Zwischenschaltung eines Rastelements 7 als wechselseitige Verriegelung ausgebildet ist. Das Trägheitselement 41' ist um eine Drehachse 411', die analog zur Drehachse 411 des vorstehend anhand der Figuren 1 bis 5 beschriebenen ersten Ausführungsbeispiels der Erfindung angeordnet ist, und weist ein von der Drehachse 411' entferntes Masseelement 413 und einen um die Drehachse 411' angeordneten Lagerbereich 414 auf.

Im gespannten Zustand der Crashverriegelung ist eine Stirnfläche 414' des Lagerbereichs 414 des Trägheitselements 41' mit einer Stirnfläche 710 eines ersten Kontaktbereichs 71 des Rastelements 7 verbunden, das um eine senkrecht zur Drehachse 411' des Trägheitselements 41' angeordnete Rastelementachse 70 verschwenkbar ist. Auf der dem ersten Kontaktbereich 71 des Rastelements 7 gegenüberliegenden Seite der Rastelementachse 70 weist das Rastelement 7 eine Nase 72 auf, die im gespannten Zustand der Crashverriegelung kraft- und/oder formschlüssig an der Stirnseite eines Steges 61 des Rückhalteelements 6 anliegt.

Das winkelförmig ausgebildete Rückhalteelement 6 weist zwei Schultern 62, 63 auf, die zu beiden Seiten von Ausnehmungen 65, 66 angeordnet sind und die Verriegelungselemente 44a, 44b aufnehmen, so daß die Schultern 62, 63 an dem Bund 440 der Verriegelungselemente 44a, 44b anliegen. Auf der der Rückhalteelementachse 60 gegenüberliegenden Seite ist ein Spannhebel 64 vorgesehen, mit dem die Verriegelungselemente 44a, 44b gegen die Federkraft der Eindrückfedern 45a, 45b zum Spannen der Verriegelungselemente 44a, 44b angehoben werden können.

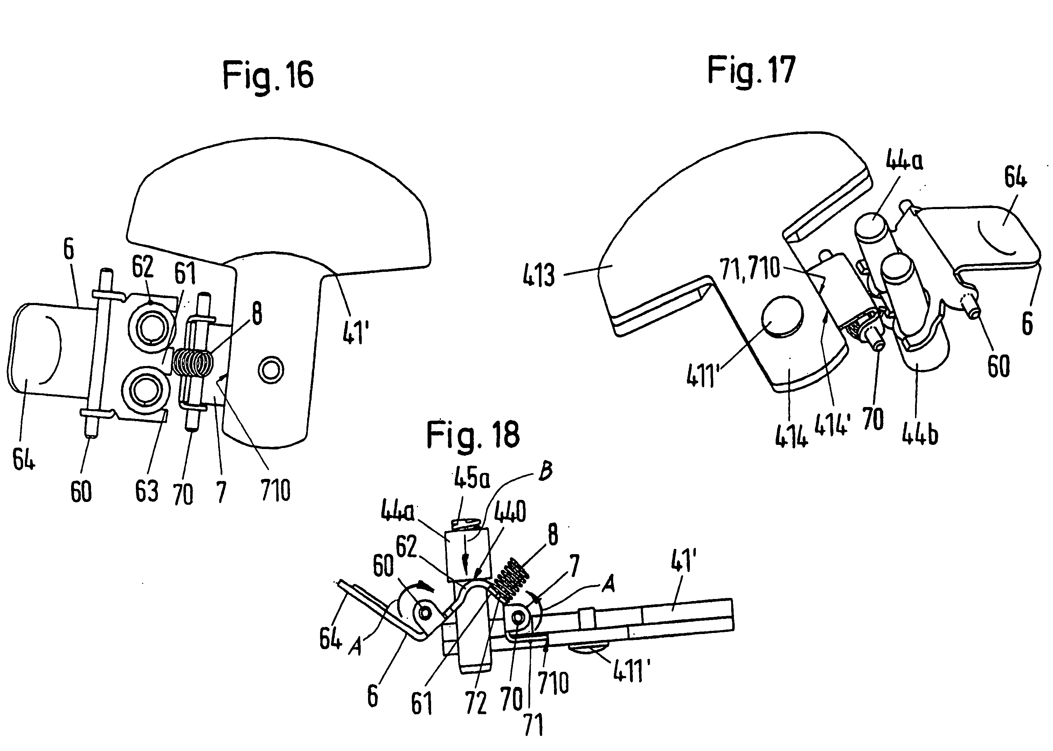

Eine an der Nase 72 des Rastelements 7 anliegende Druckfeder 8 bewirkt, daß die Nase 72 des Rastelements 7 und der Steg 61 des Rückhalteelements 6 bei einer bestimmten Stellung im angehobenen Zustand der Verriegelungselemente 44a, 44b wechselseitig verriegelt werden, d.h. form- und/oder kraftschlüssig miteinander verrasten. Dieser der Seitenansicht gemäß Figur 18 zu entnehmende Zustand der Crashverriegelung entspricht einer gespannten Mausefalle, wobei die federbelasteten Verriegelungselemente 44a, 44b dem Mausefallenbügel, die den Bügel spannende Feder den Eindrückfedern 45a, 45b und das Rastelement 7 mit dem Trägheitselement 41' der Auslöseplatte der Mausefalle entsprechen.

In der Ruheposition des Trägheitselements 41' spannen somit die Schultern 62, 63 des Rückhalteelements 6 die Verriegelungselemente 44a, 44b gegen die Wirkung der Einrückfedern 45a, 45b, während die Verriegelung des Rückhalteelements 6 über den Steg 61 mit der Nase 72 des Rastelements 7 erfolgt. Das Rastelement 7 wird auf der anderen Seite der Rastelementachse 70 durch die Anlage der Strinfläche 710 des ersten Kontaktbereichs 71 des Rastelements 7 an der Stirnfläche 414' des Lagerbereichs 414 des Trägheitselements 41' abgestützt.

Wird beim Auftreten eines Crash das Trägheitselement 41' in der einen oder anderen Richtung um die Drehachse 411' in Folge der auf die Schwenkfläche 413 des Trägheitselements 41' einwirkenden Beschleunigung verschwenkt, so wird die Anlage der Stirnfläche 710 des ersten Kontaktbereichs 71 des Rastelements 7 von der Stirnfläche 414' des Lagerbereichs 414 des Trägheitselements 41' gelöst und damit die die wechselseitige Verriegelung zwischen dem Rastelement 7 und dem Rückhalteelement 6 bewirkende Gegenkraft des Trägheitselements 41' aufgehoben, so daß das Rückhalteelement 6 und das Rastelement in Richtung der in Figur 18 eingetragenen Pfeile A verschwenken, wobei durch Verschwenken des Rückhalteelements 6 die Crashverriegelung freigegeben wird, so daß die Verriegelungselemente 44a, 44b in Richtung des in Figur 18 ebenfalls eingetragenen Pfeils B bewegt werden.

Die Herstellung der Crashverriegelung durch Freigabe der Verriegelungselemente 44a, 44b erfolgt entsprechend dem vorstehend anhand der Figuren 1 bis 5 dargestellten Ausführungsbeispiel der Erfindung. Die für die Crashverriegelung weiterhin erforderlichen Verriegelungselemente können ebenfalls den vorstehend beschriebenen Verriegelungselementen entsprechen.

Die in Figur 16 dargestellte Draufsicht auf das Ausführungsbeispiel mit wechselseitiger Verriegelung von Rückhalteelement 6 und Trägheitselement 41 bzw. Rastelement 7 zeigt eine symmetrische Anordnung der Stirnfläche 710 des ersten Kontaktbereichs 71 des Rastelements 7 in Bezug auf die Drehachse 411' des Trägheitselements 41'. Bei dieser Zuordnung wird die Crashverriegelung bei gleichen Auslösebedingugen für einen Front- oder Heckcrash ausgelöst. Bei einer Verlagerung der Stirnfläche 710 des ersten Kontaktbereichs 71 des Rastelements 7, d.h. bei einer asymmetrischen Anordnung in Bezug auf die Drehachse 411' des Trägheitselements 41' können in einfacher Weise unterschiedliche Auslösebedingungen der Crashverriegelung für einen Front- oder Heckcrash eingestellt werden. Damit kann beispielsweise im Falle eines Heckcrashes die Auslösung der Crashverriegelung bei geringerer Auslöseenergie und/oder kürzerer Auslösezeit als bei einem Frontcrash eingestellt werden.

Die Erfindung beschränkt sich auf den durch die Ansprüche definierten Bereich und umfasst nicht nur die vorstehend angegebenen bevorzugten Ausführungsbeispiele, sondern es ist eine Anzahl von Varianten denkbar, welche von der in der Zeichnung und Beschreibung dargestellten Lösung auch bei grundsätzlich andersgearteten Ausführungen Gebrauch machen.

### Bezugszeichenliste

- 1: Unterschiene
- 10: Bodenbefestigung, vorne
- 11: Bodenbefestigung, hinten

- 2: Oberschiene
- 20: Verriegelungsvorrichtung
- 21: Entriegelungshebel
- 22: Haltewinkel
- 220: Rastöffnung

- 3a: Seitenteil, gurtschloßseitig
- 3aa: Rastöffnung
- 3b: Seitenteil
- 30: Verstellvorrichtung für die Sitzhöhe
- 31: Querrohr, vorne
- 32: Querrohr, hinten
- 33a: Ausgleichshebel
- 33b: Ausgleichshebel
- 34a: Antriebshebel
- 34b: Antriebshebel
- 300: Antriebsritzel mit Sicherungsscheibe
- 340: Zahnsegment

- 4: Auslösemechanismus für die Crashverriegelung
- 40: Rasthebel
- 400: Rastöffnung
- 401: Endanschlag
- 402: Befestigungsstelle
- 41: Auslösekörper
- 41': Auslösekörper (Trägheitselement)
- 410: Kulisse
- 411: Drehachse
- 411': Drehachse
- 412a: Rückhalteelement, Rückhaltenase
- 412b: Rückhalteelement, Rückhaltenase
- 413: Masseelement des Trägheitselements
- 414: Lagerbereich des Trägheitselements
- 414': Stirnfläche des Lagerbereichs
- 42: angefedertes Halteelement
- 43: Feder
- 44a: Verriegelungselement, Bolzen, Formschlußelement
- 44b: Verriegelungselement, Bolzen, Formschlußelement
- 44': Rastfinger
- 44'': Rastfinger
- 44''': Rastfinger
- 440: Bund
- 444': Hebelarm
- 444'': Hebelarm
- 444''': Hebelarm
- 45a: Eindrückfeder
- 45b: Eindrückfeder
- 45': Feder
- 45'': Feder
- 450: Abstützung
- 46: Stützblech
- 460: Rastöffnung

- 5: Gurtschloß
- 50: Gurtschloßhaltewinkel
- 51: Befestigungsstelle

- 6: Rückhalteelement
- 60: Rückhalteelementachse
- 61: Steg
- 62: Schulter
- 63: Schulter
- 64: Spannhebel
- 65: Ausnehmung
- 66: Ausnehmung

- 7: Rastelement
- 70: Rastelementachse
- 71: erster Kontaktbereich
- 710: Stirnfläche des ersten Kontaktbereichs
- 72: zweiter Kontaktbereich (Nase)

## Patentansprüche

1. Crashverriegelung für eine Verstelleinrichtung eines Kraftfahrzeugsitzes, mit einem einen Auslösemechanismus (4) aufweisenden Auslösekörper (41, 41'), der an einem Teil des Sitzgestells schwenkbar gelagert ist und beim Überschreiten einer vorgegebenen Crashbelastung infolge seiner Trägheitsenergie die Ruhelage verläßt, wodurch eine formschlüssige Verriegelung der Verstelleinrichtung mittels wenigstens eines Verriegelungselements (44a, 44b) ermöglicht wird,
**dadurch gekennzeichnet,**
**daß** der Auslösemechanismus (4) bei Überschreitung der vorgegebenen Crashbelastung von dem wenigstens einen in Verriegelungsrichtung federelastisch vorgespannten Verriegelungselement (44a, 44b) entkoppelbar ist, welches nach der Entkopplung mit zu blockierenden Teilen der Verstelleinrichtung in Eingriff steht.

2. Crashverriegelung nach Anspruch 1, **dadurch gekennzeichnet, daß** der Auslösekörper (41, 41') ein dem Verriegelungselement (44, a, 44, b) zugeordnetes Rückhalteelement (6; 412a, 412b) steuert, an dem sich die Federkraft des vorgespannten Verriegelungselementes (44a, 44b) abstützt.

3. Crashverriegelung nach Anspruch 1 oder 2, **dadurch gekennzeichnet, daß** das Rückhalteelement (6; 412a, 412b) formschlüssig mit dem Verriegelungselement (44a, 44b) verbunden ist, wobei der Formschluß gesteuert durch den Auslösekörper (41, 41') lösbar ist.

4. Crashverriegelung nach wenigstens einem der vorangehenden Ansprüche, **dadurch gekennzeichnet, daß** der Auslösemechanismus und/oder die Verbindung des Auslösemechanismus (4) mit dem Rückhalteelement (6; 412a, 412b) so ausgebildet ist (sind), daß die Auslösebedingungen (Auslöseenergie, Auslösezeit) in Abhängigkeit von dem Aufprallort (Heckcrash, Frontcrash) veränderbar sind.

5. Crashverriegelung nach wenigstens einem der vorangehenden Ansprüche, **dadurch gekennzeichnet, daß** der Auslösemechanismus (4) eine Kulisse (410) aufweist, die bezüglich der Drehachse (411) des schwenkbar gelagerten Auslösekörpers (41) Bereiche mit sich radial veränderndem Abstand aufweist, wobei die Kulisse (410) einen Maximum- oder Minimumbereich aufweist, woran sich Bereiche geringeren bzw. größeren Abstands zur Drehachse (411) anschließen.

6. Crashverriegelung nach Anspruch 5, **dadurch gekennzeichnet, daß** der Kulisse (410) ein angefedertes Halteelement (42) zugeordnet ist, das in der Ruhelage des Auslösekörpers (41) in den Maximum- bzw. Minimumbereich der Kulisse (410) eingreift und bei einer Schwenkbewegung des Auslösekörpers (41) unter Erhöhung der darauf einwirkenden Federkraft über den angrenzenden Bereich der Kulisse (410) führbar ist.

7. Crashverriegelung nach wenigstens einem der voranstehenden Ansprüche, **dadurch gekennzeichnet, daß** der Auslösekörper (41) in zwei Richtungen schwenkbar gelagert ist, daß die Kulisse (410) beidseitig des Maximum- bzw. Minimumbereichs angrenzende Bereiche aufweist, über die das angefederte Halteelement (42) in Abhängigkeit von der Richtung der Crashbelastung führbar ist.

8. Crashverriegelung nach wenigstens einem der voranstehenden Ansprüche, **dadurch gekennzeichnet, daß** die Kulisse (410) bezüglich des. Maximum-/Minimumbereichs symmetrisch ausgebildet ist.

9. Crashverriegelung nach wenigstens einem der voranstehenden Ansprüche, **dadurch gekennzeichnet, daß** die Kulisse (410) bezüglich des Maximum-/Minimumbereichs asymmetrisch ausgebildet ist, wobei die Auslegung der Kulisse (410) die unterschiedlichen Bedingungen von Frontcrash und Heckcrash berücksichtigt.

10. Crashverriegelung nach Anspruch 9, **dadurch gekennzeichnet, daß** die Dimensionierung des Auslösemechanismus (4) für einen Heckcrash derart erfolgt, daß die Auslöseenergie gegenüber einem Frontcrash erhöht und die Auslösezeit verkürzt ist.

11. Crashverriegelung nach wenigstens einem der voranstehenden Ansprüche, **dadurch gekennzeichnet, daß** die Länge des sich an den Maximum-/Minimumbereich anschließenden Bereichs der Kulisse (410) und die Rückhalteelemente (412a, 412b) derart aufeinander abgestimmt sind, daß mit dem Überschreiten des freien Endes der Kulisse (410) die Rastbewegung der Verriegelungselemente (44a, 44b) ausgelöst wird.

12. Crashverriegelung nach wenigstens einem der voranstehenden Ansprüche, **dadurch gekennzeichnet, daß** die Steigung der sich an den Minimum-/Maximumbereich anschließenden Bereiche umso steiler gewählt ist, desto größer die notwendige Auslöseenergie des Auslösemechanismus (4) sein soll.

13. Crashverriegelung nach wenigstens einem der voranstehenden Ansprüche, **dadurch gekennzeichnet, daß** die Länge der sich an den Maximum-/Minimumbereich anschließenden Bereiche umso größer gewählt ist, desto länger der Zeitraum vom Beginn eines Crashs bis zur Freigabe der Rastbewegung der Verriegelungselemente (44a, 44b) sein soll.

14. Crashverriegelung nach wenigstens einem der voranstehenden Ansprüche, **dadurch gekennzeichnet, daß** die Kulisse (410) Bestandteil des Auslösekörpers (41) ist und daß das angefederte Halteelement (42) am Sitzgestell (3a) gelagert ist.

15. Crashverriegelung nach wenigstens einem der voranstehenden Ansprüche, **dadurch gekennzeichnet, daß** die Kulisse (410) am Seitenteil (3a) angeordnet ist und daß das angefederte Halteelement (42) am oder im Auslösekörper (41) gelagert ist.

16. Crashverriegelung nach wenigstens einem der voranstehenden Ansprüche, **dadurch gekennzeichnet, daß** die Federverspannung zwischen dem Halteelement (42) und der Kulisse (410) durch ein separates Federelement (43) erzeugt wird.

17. Crashverriegelung nach wenigstens einem der voranstehenden Ansprüche, **dadurch gekennzeichnet, daß** die Federverspannung zwischen dem Halteelement (42'') und der Kulisse (410'') durch einen die Kulisse (410'') bildenden Federbügel (43") erzeugt wird, der mit dem Auslösekörper (41") oder mit der Seitenteil (3a) verbunden ist.

18. Crashverriegelung nach wenigstens einem der voranstehenden Ansprüche, **dadurch gekennzeichnet, daß** die Verriegelungselemente (44a, 44b) als axial verschiebbare Bolzen oder dergleichen mit einem Bund (440) ausgebildet sind, wobei der Bund (440) in der Ruheposition des Auslösekörpers (41) einerseits mit einer Feder (45a, 45b) und andererseits mit einem Rückhalteelement (412a, 412b) im Eingriff steht.

19. Crashverriegelung nach wenigstens einem der voranstehenden Ansprüche, **dadurch gekennzeichnet, daß** das Verriegelungselement als schwenkbarer Hebelarm (444', 444'', 444''') mit Rastfingern (44', 44'', 44''') ausgebildet ist.

20. Crashverriegelung nach Anspruch 19, **dadurch gekennzeichnet, daß** der Hebelarm (444', 444'') um eine Drehachse schwenkbar gelagert ist und mit einem separaten Federelement (45') oder einer integrierten Feder (45'') zur Erzeugung einer elastischen Vorspannung in Verriegelungsrichtung in Verbindung steht.

21. Crashverriegelung nach Anspruch 19, **dadurch gekennzeichnet, daß** der Hebelarm (444''') mit dem dem Rastfinger (44''') gegenüberliegenden Ende fest eingespannt und derart elastisch gebogen ist, daß der Hebelarm (444''') selbst die Funktion der Eindrückfeder übernehmen kann.

22. Crashverriegelung nach wenigstens einem der vorangehenden Ansprüche 1 bis 4, **dadurch gekennzeichnet, daß** das Rückhalteelement (6) und der Auslösekörper (41') durch Form- und/oder Kraftschluß wechselseitig verriegelbar sind und die wechselseitige Verriegelung aufgehoben wird, wenn die vorgegebene Crashbelastung überschritten wird.

23. Crashverriegelung nach Anspruch 22, **dadurch gekennzeichnet, daß** zwischen dem Rückhalteelement (6) und dem Auslösekörper (41') ein um eine Rastelementachse (70) schwenkbares Rastelement (7) angeordnet ist, das einen mit einer Stirnfläche (710) am Auslösekörper (41') anliegenden ersten Kontaktbereich (71) und einen die Verriegelung mit dem Rückhalteelement (6) bildenden zweiten Kontaktbereich (72) aufweist.

24. Crashverriegelung nach Anspruch 23, **dadurch gekennzeichnet, daß** das Rastelement (7) in Schwenkrichtung um seine Rastelementachse (70) federbelastet ist.

25. Crashverriegelung nach wenigstens einem der vorangehenden Ansprüche 22 bis 24, **dadurch gekennzeichnet, daß** das Rückhalteelement (6) um eine im wesentlichen parallel zur Rastelementachse (70) verlaufende Rückhalteelementachse (60) schwenkbar ist und mindestens eine an einem Bund (440) des mindestens einen Verriegelungselements (44a, 44b) anliegende Schulter (62, 63) und einen an einer Nase (72) des Rastelements (7) unter Federspannung anliegenden Steg (61) aufweist.

26. Crashverriegelung nach Anspruch 25, **dadurch gekennzeichnet, daß** die Schulter (62, 63) und der Steg (61) des Rückhalteelements (6) auf der einen Seite der Rückhalteelementachse (60) und ein Spannhebel (64) auf der anderen Seite der Rückhalteelementachse (60) angeordnet sind.

27. Crashverriegelung nach Anspruch 25 oder 26, **dadurch gekennzeichnet, daß** die Stirnseiten der Nase (72) des Rastelements (7) und des Steges (61) des Rückhalteelements (6) im gespannten Zustand der Crashverriegelung kraftschlüssig gegeneinanderstoßen.

28. Crashverriegelung nach wenigstens einem der vorangehenden Ansprüche 22 bis 27, **dadurch gekennzeichnet, daß** der Auslösekörper aus einem um eine Drehachse (411') schwenkbaren Trägheitselement (41') besteht, das ein achsfernes Massenelement (413) und einen um die Drehachse (411') angeordnete Lagerbereich (414) aufweist.

29. Crashverriegelung nach Anspruch 28, **dadurch gekennzeichnet, daß** im gespannten Zustand der Crashverriegelung die Stirnfläche (710) des ersten Kontaktbereichs (71) des Rastelements (7) an einer Stirnfläche (414') des Lagerbereichs (414) des Trägheitselements (41') anliegt und daß die Lage des Rastelements (7) in Bezug auf die Drehachse (411') des Trägheitselements (41') veränderbar ist.

30. Crashverriegelung nach wenigstens einem der vorangehenden Ansprüche 22 bis 29, **gekennzeichnet durch** zwei nebeneinander angeordnete Verriegelungselemente (44a, 44b) und zwei um Ausnehmungen (65, 66) des Rückhalteelements (6) ausgebildete Schultern (62, 63) des Rückhalteelements (6), zwischen denen der Steg (61) des Rückhalteelements (6) angeordnet ist.

31. Crashverriegelung nach wenigstens einem der vorangehenden Ansprüche 22 bis 30, **dadurch gekennzeichnet, daß**die Drehachse (411') des Trägheitselements (41') symmetrisch zur Stirnfläche (710) des ersten Kontaktbereichs (71) des Rastelements (7) angeordnet ist.

32. Crashverriegelung nach wenigstens einem der vorangehenden Ansprüche 22 bis 30, **dadurch gekennzeichnet, daß**die Drehachse (411') des Trägheitselements (41') asymmetrisch zur Stirnfläche (710) des ersten Kontaktbereichs (71) des Rastelements (7) angeordnet ist.

33. Crashverriegelung nach wenigstens einem der voranstehenden Ansprüche, **dadurch gekennzeichnet, daß** das Verriegelungselement (44a, 44b) im Zustand der Crashverriegelung eine Rastöffnung (3aa) im Sitzgestell (Seitenteil 3a), eine Rastöffnung (460) in einem mit dem Sitzgestell verbundenen Teil (Stützblech 46) sowie eine Rastöffnung (400) in einem an einem Basisteil (Oberschiene 2) des Sitzes befestigten Teil (Rasthebel 40) durchgreift, so daß das Verriegelungselement (44a, 44b) im Crashfall im wesentlichen auf Scherung beansprucht wird.

34. Crashverriegelung nach wenigstens einem der voranstehenden Ansprüche, **dadurch gekennzeichnet, daß** der Rasthebel (40) mehrere Rastöffnungen (400) aufweist, die entlang einer Bahn angeordnet sind, welche von den Verriegelungselementen (44a, 44b) im Verstellweg der Sitzverstelleinrichtung überfahren wird.

35. Crashverriegelung nach wenigstens einem der voranstehenden Ansprüche, **dadurch gekennzeichnet, daß** die Rastöffnungen (400) des Rasthebels (40) wesentlich größer als die sitzgestellseitigen Rastöffnungen (3aa, 460) sind, z.B. 1,5 bis 2 mal so groß, bezogen auf die Bahn der Verriegelungselemente (44a, 44b).

36. Crashverriegelung nach wenigstens einem der voranstehenden Ansprüche, **dadurch gekennzeichnet, daß** einer Crashverriegelung mehrere Verriegelungselemente (44a, 44b) zugeordnet sind, deren Teilung sich von der Teilung des Rasthebels (40) derart unterscheidet, daß in jeder beliebigen Verstellposition der Sitzverstelleinrichtung wenigstens ein Verriegelungselement (44a, 44b) in eine Rastöffnung (400) des Rasthebels (40) einrasten kann.

37. Crashverriegelung nach wenigstens einem der voranstehenden Ansprüche, **dadurch gekennzeichnet, daß** das freie Ende des Rasthebels (40) mit einem Endanschlag (401) versehen ist, der eine Verlagerung der entsprechenden Verstelleinrichtung in die entsprechende Richtung begrenzt.

38. Crashverriegelung nach wenigstens einem der voranstehenden Ansprüche, **gekennzeichnet durch** ihre Verwendung für Sitzverstelleinrichtungen mit einem Hebelgetriebe, insbesondere für eine Sitzhöhen- oder Sitzneigungsverstellung.

39. Crashverriegelung nach wenigstens einem der voranstehenden Ansprüche, **gekennzeichnet durch** ihre Verwendung für Sitzverstelleinrichtungen mit einem Getriebe, das wenigstens ein Getriebeelement aus Kunststoff, vorzugsweise ein Vollkunststoffgetriebe, aufweist.

## Claims

1. Crash locking mechanism for an adjustment device of an automobile seat, with a triggering body (41, 41') having a triggering mechanism (4) and mounted for swivel movement on a part of the seat frame and when a predetermined crash load is exceeded the triggering body leaves the rest position as a result of its inertial energy whereby a positive fit locking of the adjustment device is possible by means of at least one locking element (44a, 44b),
**characterised in that**
the triggering mechanism (4) on exceeding the predetermined crash load can be uncoupled from the at least one locking element (44a, 44b) which is elastically pretensioned in the locking direction, which after the uncoupling comes into engagement with the parts of the adjustment device to be blocked.

2. Crash locking mechanism according to claim 1 **characterised in that** the triggering body (41, 41') controls a retaining element (6; 412a, 412b) associated with the locking element (44a, 44b) and to which the spring force of the pretensioned locking element (44a, 44b) is applied.

3. Crash locking mechanism according to claim 1 or 2 **characterised in that** the retaining element (6; 412a, 412b) is connected in positive locking engagement to the locking element (44a, 44b) wherein the positive locking connection can be released controlled by the triggering body (41, 41').

4. Crash locking mechanism according to at least one of the preceding claims **characterised in that** the triggering mechanism and/or the connection of the triggering mechanism (4) with the retaining element (6; 412a, 412b) is (are) formed so that the triggering conditions (triggering energy, triggering time) are variable in dependence on the site of impact (rear impact crash, front impact crash).

5. Crash locking mechanism according to at least one of the preceding claims, **characterised in that** the triggering mechanism (4) has a connecting link (410) which has in relation to the rotary axis (411) of the swivel mounted triggering body (41) areas with a radially changing distance wherein the connecting link (410) has a maximum or minimum area adjoined by areas of lesser or greater distance from the axis of rotation (411).

6. Crash locking mechanism according to claim 5 **characterised in that** the connecting link (410) is associated with a resiliently mounted holding element (42) which in the rest position of the triggering body (41) engages in the maximum or minimum area of the connecting link (410) and in the event of a swivel movement of the triggering body (41) can be moved over the adjoining area of the connecting link (410) through an increase in the spring force acting on the triggering body.

7. Crash locking according to at least one of the preceding claims, **characterised in that** the triggering body (41) is mounted for swivel movement in two directions, the connecting link (410) has either side of the maximum and minimum area adjoining areas over which the resilient holding element (42) can be guided in dependence on the direction of the crash load.

8. Crash locking mechanism according to at least one of the preceding claims **characterised in that** the connecting link (410) is formed symmetrical relative to the maximum/minimum area.

9. Crash locking mechanism according to at least one of the preceding claims **characterised in that** the connecting link (410) is formed asymmetrical relative to the maximum/minimum area whereby the design of the connecting link (410) takes into consideration the different conditions of a front impact crash and a rear impact crash.

10. Crash locking mechanism according to claim 9 **characterised in that** the dimensioning of the triggering mechanism (4) for a rear impact crash is such that the triggering energy is increased compared to a front impact crash and the triggering time is shortened.

11. Crash locking mechanism according to at least one of the preceding claims **characterised in that** the length of the area of the connecting link (410) adjoining the maximum/minimum area, and the retaining elements (412a, 412b) are matched with each other so that on overstepping the free end of the connecting link (410) the detent movement of the locking elements (44a, 44b) is triggered.

12. Crash locking mechanism according to at least one of the preceding claims, **characterised in that** the pitch of the areas adjoining the minimum/maximum area is selected steeper the greater the required triggering energy of the triggering mechanism (4).

13. Crash locking mechanism according to at least one of the preceding claims, **characterised in that** the length of the areas adjoining the maximum/minimum area is selected greater the longer the time span from the beginning of a crash up to the release of the detent movement of the locking elements (44a, 44b).

14. Crash locking mechanism according to at least one of the preceding claims, **characterised in that** the connecting link (410) is a constituent part of the triggering body (41) and that the resilient holding element (42) is mounted on the seat frame (3a).

15. Crash locking mechanism according to at least one of the preceding claims, **characterised in that** the connecting link (410) is mounted on the side part (3a) and that the resilient holding element (42) is mounted on or in the triggering body (41).

16. Crash locking mechanism according to at least one of the preceding claims **characterised in that** the spring tension is produced between the holding element (42) and the connecting link (410) through a separate spring element (43).

17. Crash locking mechanism according to at least one of the preceding claims **characterised in that** the spring tension between the holding element (42'') and the connecting link (410'') is produced through a spring clip (43'') which forms the connecting link (410'') and which is connected to the triggering body (41'') or to the side part (3a).

18. Crash locking mechanism according to at least one of the preceding claims, **characterised in that** the locking elements (44a, 44b) are formed as axially displaceable bolts or the like with a collar (440) wherein the collar (440) in the rest position of the triggering body (41) engages with a spring (45a, 45b) on one side and with a retaining element (412a, 412b) on the other.

19. Crash locking mechanism according to at least one of the preceding claims, **characterised in that** the locking element is formed as a swivel lever arm (444', 444'', 444''') with detent fingers (44', 44'', 44''').

20. Crash locking mechanism according to claim 19 **characterised in that** the lever arm (444', 444'') is mounted to swivel about a rotary axis and is connected to a separate spring element (45') or an integrated spring (45'') to produce an elastic pretensioning in the locking direction.

21. Crash locking mechanism according to claim 19 **characterised in that** the lever arm (444''') is fixedly tensioned and elastically curved at the end opposite the detent finger (44''') so that the lever arm (444''') can itself undertake the function of the compression spring.

22. Crash locking mechanism according to at least one of the preceding claims 1 to 4 **characterised in that** the retaining element (6) and the triggering body (41') are lockable mutually through positive and/or force locking connection and the mutual locking is lifted when the predetermined crash load is exceeded.

23. Crash locking mechanism according to claim 22 **characterised in that** between the retaining element (6) and the triggering body (41') there is a detent element (7) which is able to swivel about a detent element axis (70) and which has a first contact area (71) bearing with an end face (710) on the triggering body (41'), and a second contact area (72) which forms the locking mechanism with the retaining element (6).

24. Crash locking mechanism according to claim 23 **characterised in that** the detent element is spring loaded in the swivel direction about its detent element axis (70).

25. Crash locking mechanism according to at least one of the preceding claims 22 to 24 **characterised in that** the retaining element (6) is able to swivel about a retaining element axis (60) running substantially parallel to the detent element axis (70) and has at least one shoulder (62, 63) adjoining a collar (440) of the at least one locking element (44a, 44b), and a web (61) which bears with spring tension against a nose (72) of the detent element (7).

26. Crash locking mechanism according to claim 25 **characterised in that** the shoulder (62, 63) and the web (61) of the retaining element (6) are mounted on one side of the retaining element axis (60), and a tension lever (64) is mounted on the other side of the retaining element axis (60).

27. Crash locking mechanism according to claim 25 or 26 **characterised in that** the end sides of the nose (72) of the detent element (7) and of the web (61) of the retaining element (6) abut each other with force-locking engagement in the tensioned state of the crash locking mechanism.

28. Crash locking mechanism according to at least one of the preceding claims 22 to 27 **characterised in that** the triggering body consists of an inertia element (41') which is able to swivel about a rotary axis (411') and which has a mass element (413) remote from the axis and a bearing area (414) mounted about the rotary axis (411').

29. Crash locking mechanism according to claim 28 **characterised in that** in the tensioned state of the crash locking mechanism the end face (710) of the first contact area (71) of the detent element (7) adjoins an end face (414') of the bearing area (414) of the inertia element (41'), and that the position of the detent element (7) in relation to the rotary axis (41'') of the inertia element (41') can be changed.

30. Crash locking mechanism according to at least one of the preceding claims 22 to 29 **characterised by** two locking elements (44a, 44b) mounted side by side and by two shoulders (62, 63) of the retaining element (6) formed about recesses (65,66) of the retaining element (6), wherein the web (61) of the retaining element (6) is mounted between the shoulders.

31. Crash locking mechanism according to at least one of the preceding claims 22 to 30 **characterised in that** the rotary axis (411') of the inertia element (41') is mounted symmetrical relative to the end face (710) of the first contact area (71) of the detent element (7).

32. Crash locking mechanism according to at least one of the preceding claims 22 to 30 **characterised in that** the rotary axis (411') of the inertia element (41') is mounted asymmetric to the end face (710) of the first contact area (71) of the detent element (7).

33. Crash locking mechanism according to at least one of the preceding claims **characterised in that** the locking element (44a, 44b) in the crash-locked state passes through a detent opening (3aa) in the seat frame (side part 3a), a detent opening (460) in a part (support plate 46) connected to the seat frame, as well as through a detent opening (400) in a part (detent lever 40) fixed on a base part (top rail 2) of the seat, so that the locking element (44a, 44b) in the event of a crash is shear-stressed.

34. Crash locking according to at least one of the preceding claims **characterised in that** the detent lever (40) has several detent openings (400) which are arranged along a path over which the locking elements (44a, 44b) travel in the displacement path of the seat adjustment device.

35. Crash locking mechanism according to at least one of the preceding claims **characterised in that** the detent openings (400) of the detent lever (40) are substantially larger than the detent openings (3aa, 460) on the side of the seat frame e.g., 1. 5 to 2 times larger, in relation to the path of the locking elements (44a, 44b).

36. Crash locking mechanism according to at least one of the preceding claims, **characterised in that** one crash locking mechanism is associated with several locking elements (44a, 44b) whose division differs from the division of the detent lever (40) so that in any adjusted position of the seat adjustment device at least one locking element (44a, 44b) can engage in a detent opening (400) of the detent lever (40).

37. Crash locking mechanism according to at least one of the preceding claims **characterised in that** the free end of the detent lever (40) is provided with an end stop (401) which restricts the displacement of the corresponding adjustment device in the corresponding direction.

38. Crash locking mechanism according to at least one of the preceding claims **characterised by** its use for seat adjustment devices having a lever gearing, more particularly for adjusting the height or incline of a seat.

39. Crash locking mechanism according to at least one of the preceding claims **characterised by** its use for seat adjustment devices having a gearing which has at least one gear element of plastics, preferably a solid plastics gearing.

## Revendications

1. Verrouillage de collision d'un dispositif de réglage d'un siège de véhicule automobile, comportant un corps de déclenchement (41, 41') à mécanisme de déclenchement (4), qui est monté avec faculté de pivotement sur une partie du bâti de siège et qui, lors du dépassement d'une charge de collision prédéterminée, quitte la position de repos en raison de son énergie d'inertie, suite à quoi un verrouillage par coopération de formes du dispositif de réglage au moyen d'au moins un élément de verrouillage (44a, 44b) devient possible,
**caractérisé en ce que**
lors du dépassement de la charge de collision prédéterminée, le mécanisme de déclenchement (4) est susceptible d'être découplé dudit au moins un élément de verrouillage (44a, 44b) précontraint élastiquement par ressort en direction de verrouillage, élément qui, après découplage, est en engagement avec des parties à bloquer du dispositif de réglage.

2. Verrouillage de collision selon la revendication 1, **caractérisé en ce que** le corps de déclenchement (41, 41') commande un élément de retenue (6 ; 412a, 412b) associé à l'élément de verrouillage (44a, 44b), contre lequel s'applique l'effort élastique de l'élément de verrouillage précontraint (44a, 44b).

3. Verrouillage de collision selon l'une ou l'autre des revendications 1 et 2, **caractérisé en ce que** l'élément de retenue (6 ; 412a, 412b) est relié en coopération de formes à l'élément de verrouillage (44a, 44b), la coopération de formes pouvant être défaite sous la commande du corps de déclenchement (41, 41').

4. Verrouillage de collision selon l'une des revendications précédentes, **caractérisé en ce que** le mécanisme de déclenchement et/ou la liaison du mécanisme de déclenchement (4) avec l'élément de retenue (6 ; 412a, 412b) est/sont réalisé(s) de telle sorte que les conditions de déclenchement (énergie de déclenchement, temps de déclenchement) sont variables en fonction du lieu d'impact (collision arrière, collision frontale).

5. Verrouillage de collision selon l'une des revendications précédentes, **caractérisé en ce que** le mécanisme de déclenchement (4) comprend un coulisseau qui comporte des zones dont la distance se modifie radialement par rapport à l'axe de rotation (411) du corps de déclenchement (41) monté pivotant, le coulisseau (410) comprenant une zone maximale ou minimale à laquelle se raccordent des zones de distance plus petite ou plus grande par rapport à l'axe de rotation (411).

6. Verrouillage de collision selon la revendication 5, **caractérisé en ce qu'**au coulisseau (410) est associé un élément de maintien (42) monté sur ressort, qui s'engage dans la zone maximale ou minimale du coulisseau (410) dans la position de repos du corps de déclenchement (41) et qui, lors d'un mouvement de pivotement du corps de déclenchement (41) avec augmentation de la force élastique agissant sur celui-ci, peut être mené par-dessus la zone adjacente du coulisseau (410).

7. Verrouillage de collision selon l'une des revendications précédentes, **caractérisé en ce que** le corps de déclenchement (41) est monté avec faculté de pivotement dans deux directions, **en ce que** le coulisseau (410) présente des zones adjacentes de part et d'autre de la zone maximale ou minimale, par-dessus lesquelles l'élément de maintien (42) monté sur ressort peut être mené en fonction de la direction de la charge de collision.

8. Verrouillage de collision selon l'une des revendications précédentes, **caractérisé en ce que** le coulisseau (410) est réalisé symétriquement par rapport à la zone maximale/minimale.

9. Verrouillage de collision selon l'une des revendications précédentes, **caractérisé en ce que** le coulisseau (410) est réalisé asymétriquement par rapport à la zone maximale/minimale, la conception du coulisseau (410) prenant en compte les conditions différentes d'une collision frontale et d'une collision arrière.

10. Verrouillage de collision selon la revendication 9, **caractérisé en ce que** le dimensionnement du mécanisme de déclenchement (4) pour une collision arrière s'effectue de telle sorte que l'énergie de déclenchement est augmentée par rapport à une collision frontale et le temps de déclenchement est raccourci.

11. Verrouillage de collision selon l'une des revendications précédentes, **caractérisé en ce que** la longueur de la zone du coulisseau (410) qui se raccorde à la zone maximale/minimale et les éléments de retenue (412a, 412b) sont adaptés les uns aux autres de telle sorte que lors du dépassement de l'extrémité libre du coulisseau (410), le mouvement d'enclenchement des éléments de verrouillage (44a, 44b) est déclenché.

12. Verrouillage de collision selon l'une des revendications précédentes, **caractérisé en ce que** plus l'énergie de déclenchement nécessaire du mécanisme de déclenchement (4) doit être importante, plus la pente des zones qui se raccordent à la zone minimale/maximale est choisie raide.

13. Verrouillage de collision selon l'une des revendications précédentes, **caractérisé en ce que** plus la période temporelle du début d'une collision jusqu'à la libération du mouvement d'enclenchement des éléments de verrouillage (44a, 44b) doit être longue, plus la longueur des zones qui se raccordent à la zone minimale/maximale est choisie grande.

14. Verrouillage de collision selon l'une des revendications précédentes, **caractérisé en ce que** le coulisseau (410) fait partie du corps de déclenchement (41) et **en ce que** l'élément de maintien (42) monté sur ressort est monté sur le bâti de siège (3a).

15. Verrouillage de collision selon l'une des revendications précédentes, **caractérisé en ce que** le coulisseau (410) est agencé sur la partie latérale (3a) et **en ce que** l'élément de maintien (42) monté sur ressort est monté sur ou dans le corps de déclenchement (41).

16. Verrouillage de collision selon l'une des revendications précédentes, **caractérisé en ce que** la contrainte élastique entre l'élément de maintien (42) et le coulisseau (410) est générée par un élément ressort séparé (43).

17. Verrouillage de collision selon l'une des revendications précédentes, **caractérisé en ce que** la contrainte élastique entre l'élément de maintien (42") et le coulisseau (410") est générée par un arceau élastique (43") formant le coulisseau (410"), qui est relié au corps de déclenchement (41") ou à la partie latérale (3a).

18. Verrouillage de collision selon l'une des revendications précédentes, **caractérisé en ce que** les éléments de verrouillage (44a, 44b) sont réalisés sous forme de goujons axialement mobiles ou similaires et présentant un collier (440), et dans la position de repos du corps de déclenchement (41) le collier (440) est en engagement d'une part avec un ressort (45a, 45b) et d'autre part avec un élément de retenue (412a, 412b).

19. Verrouillage de collision selon l'une des revendications précédentes, **caractérisé en ce que** l'élément de verrouillage est réalisé sous forme de bras de levier pivotant (444', 444", 444"') comportant des doigts d'enclenchement (44', 44", 44''').

20. Verrouillage de collision selon la revendication 19, **caractérisé en ce que** le bras de levier (444', 444") est monté pivotant autour d'un axe de rotation et est en liaison avec un élément ressort séparé (45') ou avec un ressort intégré (45") pour générer une précontrainte élastique en direction de verrouillage.

21. Verrouillage de collision selon la revendication 19, **caractérisé en ce que** le bras de levier (444"') est fermement serré à l'extrémité opposée au doigt d'enclenchement (44"') et est élastiquement cintré de telle sorte que le bras de levier (444"') peut remplir lui-même la fonction du ressort d'enfoncement.

22. Verrouillage de collision selon l'une des revendications 1 à 4, **caractérisé en ce que** l'élément de retenue (6) et le corps de déclenchement (41') sont susceptibles d'être verrouillés mutuellement par coopération de formes et/ou de forces, et **en ce que** le verrouillage mutuel est annulé lorsque la charge de collision prédéterminée est dépassée.

23. Verrouillage de collision selon la revendication 22, **caractérisé en ce qu'**il est prévu entre l'élément de retenue (6) et le corps de déclenchement (41') un élément d'enclenchement (7) pivotant autour d'un axe (70) de l'élément d'enclenchement qui comprend une première zone de contact (71) en appui par une surface frontale (710) contre le corps de déclenchement (41') et une deuxième zone de contact (72) formant le verrouillage avec l'élément de retenue (6).

24. Verrouillage de collision selon la revendication 23, **caractérisé en ce que** l'élément d'enclenchement (7) est chargé par un ressort en direction de pivotement autour de son axe (70).

25. Verrouillage de collision selon l'une des revendications 22 à 24, **caractérisé en ce que** l'élément de retenue (6) est mobile en pivotement autour d'un axe d'élément de retenue (60) s'étendant sensiblement parallèlement à l'axe (70) de l'élément d'enclenchement, et **en ce qu'**il comprend au moins un épaulement (62, 63) prenant appui contre un collier (440) dudit au moins un élément de verrouillage (44a, 44b) ainsi qu'une barrette (61) prenant appui sous contrainte élastique contre un bec (72) de l'élément d'enclenchement (7).

26. Verrouillage de collision selon la revendication 25, **caractérisé en ce que** l'épaulement (62, 63) et la barrette (61) de l'élément de retenue (6) sont agencés sur un côté de l'axe (60) de l'élément de retenue, et un levier de tensionnement (64) est agencé sur l'autre côté de l'axe (60) de l'élément de retenue.

27. Verrouillage de collision selon la revendication 25 ou 26, **caractérisé en ce que** les faces frontales du bec (72) de l'élément d'enclenchement (7) et de la barrette (61) de l'élément de retenue (6) butent l'une contre l'autre par coopération de forces dans l'état tendu du verrouillage de collision.

28. Verrouillage de collision selon l'une des revendications 22 à 27, **caractérisé en ce que** le corps de déclenchement est constitué par un élément d'inertie (41') pivotant autour d'un axe de rotation (411'), élément qui comprend un élément formant masse (413) éloigné de l'axe et une zone de palier (414) agencée autour de l'axe de rotation (411').

29. Verrouillage de collision selon la revendication 28, **caractérisé en ce que** dans l'état tenu du verrouillage de collision, la surface frontale (710) de la première zone de contact (71) de l'élément d'enclenchement (7) prend appui contre une surface frontale (414') de la zone de montage (414) de l'élément d'inertie (41'), et **en ce que** la position de l'élément d'enclenchement (7) est variable par rapport à l'axe de rotation (411') de l'élément d'inertie (41').

30. Verrouillage de collision selon l'une des revendications 22 à 29, **caractérisé par** deux éléments de verrouillage (44a, 44b) agencés l'un à côté de l'autre et par deux épaulements (62, 63) de l'élément de retenue (6) réalisés autour d'évidements (65, 66) de l'élément de retenue (6), entre lesquels est agencée la barrette (61) de l'élément de retenue (6).

31. Verrouillage de collision selon l'une des revendications 22 à 30, **caractérisé en ce que** l'axe de rotation (411') de l'élément d'inertie (41') est agencé symétriquement par rapport à la surface frontale (710) de la première zone de contact (71) de l'élément d'enclenchement (7).

32. Verrouillage de collision selon l'une des revendications 22 à 30, **caractérisé en ce que** l'axe de rotation (411') de l'élément d'inertie (41') est agencé asymétriquement par rapport à la surface frontale (710) de la première zone de contact (71) de l'élément d'enclenchement (7).

33. Verrouillage de collision selon l'une des revendications précédentes, **caractérisé en ce que** l'élément de verrouillage (44a, 44b) traverse, dans l'état verrouillé en cas de collision, une ouverture d'enclenchement (3aa) dans le bâti de siège (partie latérale 3a), une ouverture d'enclenchement (460) dans une partie (tôle de soutien 46) reliée au bâti de siège, ainsi qu'une ouverture d'enclenchement (400) dans une partie (levier d'enclenchement 40) fixée sur une partie de base (rail supérieur 2) du siège, de sorte qu'en cas de collision l'élément de verrouillage (44a, 44b) est sollicité sensiblement en cisaillement.

34. Verrouillage de collision selon l'une des revendications précédentes, **caractérisé en ce que** le levier d'enclenchement (40) présente plusieurs ouvertures d'enclenchement (400) qui sont ménagées le long d'une trajectoire qui est parcourue par les éléments de verrouillage (44a, 44b) dans le trajet de réglage du dispositif de réglage de siège.

35. Verrouillage de collision selon l'une des revendications précédentes, **caractérisé en ce que** les ouvertures d'enclenchement (400) du levier d'enclenchement (40) sont sensiblement plus grandes que les ouvertures d'enclenchement (3aa, 460) côté bâti de siège, par exemple 1,5 à 2 fois plus grandes, par rapport à la trajectoire des éléments de verrouillage (44a, 44b).

36. Verrouillage de collision selon l'une des revendications précédentes, **caractérisé en ce que** plusieurs éléments de verrouillage (44a, 44b) sont associés à un verrouillage de collision, dont le pas se distingue du pas du levier d'enclenchement (40) de telle sorte que dans chaque position de réglage quelconque du dispositif de réglage de siège, au moins un élément de verrouillage (44a, 44b) peut s'enclencher dans une ouverture d'enclenchement (400) du levier d'enclenchement (40).

37. Verrouillage de collision selon l'une des revendications précédentes, **caractérisé en ce que** l'extrémité libre du levier d'enclenchement (40) est pourvue d'une butée terminale (401) qui limite un déplacement du dispositif de réglage correspondant dans la direction correspondante.

38. Verrouillage de collision selon l'une des revendications précédentes, **caractérisé par** son utilisation pour des dispositifs de réglage de siège comportant un mécanisme à levier, en particulier pour un réglage de la hauteur du siège ou de l'inclinaison du siège.

39. Verrouillage de collision selon l'une des revendications précédentes, **caractérisé par** son utilisation pour des dispositifs de réglage de siège comportant un mécanisme de transmission qui comprend au moins un élément de transmission en matière plastique, de préférence un mécanisme de transmission complètement en matière plastique.
